# EUROPEAN PATENT APPLICATION

(11) **EP 4 822 346 A2**
(43) Date of publication of application: **14.10.2026**
(21) Application number: 26200502.8
(22) Date of filing: 29.01.2019
(51) Int. Cl.: G01N 27/30

(54) **MEASUREMENT UNIT FOR AN ION-SENSITIVE SOLID-STATE ELECTRODE AND ION-SENSITIVE ELECTRODE**

(30) Priority: 30.01.2018 EP 18154259
(62) Document number(s) of the earlier application(s) in accordance with Art. 76 EPC: 19701380.8 / 3 746 780
(71) Applicant: Mettler-Toledo GmbH, 8606 Greifensee (CH)
(72) Inventor: Rutz, Andreas, 8052 Zürich (CH); Ehrismann, Philippe, 8610 Uster (CH); Limon Petersen, Juan, 8906 Bonstetten (CH); Barcella, Corrado, 5304 Endingen (CH)
(74) Representative: Mettler-Toledo

(57) **Abstract**

Measurement unit (1) for an ion-sensitive solid-state electrode (10), that serves to measure pH in a measurement solution (5), with a layered structure (6) comprising an ion-sensitive glass layer (11) with a first ring-shaped contact surface (111), an electrically conducting layer (13) that directly or via at least one intermediate layer (12) adheres to the ion-sensitive glass layer (11), and a substrate (14) that adheres to the electrically conducting layer (13) and is provided with a second ring-shaped contact surface (141); and with a holding member (18) that is provided with a first ring-shaped sealing surface (181), a second ring-shaped sealing surface (182), and an annular section (189); wherein the first ring-shaped sealing surface (181) is sealingly connected to the first ring-shaped contact surface (111), wherein the second ring-shaped sealing surface (182) is connected to the second ring-shaped contact surface (141) of the substrate (14), and wherein the first and second ring-shaped sealing surfaces (181, 182) of the holding member (18) are sealingly connected by the annular section (189).

## Description

The present invention relates to a solid-state measurement unit for a solid-state ion-sensitive electrode and to an ion-sensitive electrode provided with said solid-state measurement unit.

In laboratories and industrial processes, glass electrodes are often used for measuring ion activities, in particular pH-values. These glass electrodes typically comprise a thin ion-sensitive glass membrane, which is attached or melted to the end piece of a glass shaft of the glass electrode.

Principles of pH-measurement and related pH-electrodes are described in "A guide to pH-measurement", 03/2016, Mettler-Toledo GmbH. The pH-electrode typically consists of a glass shaft having a thin glass membrane at one end, which is sensitive to *H*⁺-ions. An outer gel layer forms on the outside of this membrane glass, when the membrane is exposed to a measurement solution. In addition, an inner gel layer forms on the inside of the glass membrane, as the electrode is filled with an internal buffer. The *H*⁺-ions either diffuse into or diffuse out of the outer gel layer, depending on the *H*⁺- ion concentration or the pH-value of the measurement solution. If the solution is alkaline the *H*⁺-ions diffuse out of the layer and a negative charge is established on the outer side of the membrane. As the internal buffer has a constant pH-value, the potential on the inner surface of the membrane remains constant during the measurement. Therefore, the potential measured by the pH-electrode is the difference between the constant inner and the variable outer charge of the ion-sensitive glass membrane. Additionally, the inner buffer contains a constant concentration of chloride that produces a constant potential to the silver / silver chloride Ag/AgCl electrode immersed in the same inner buffer. This electrochemical chain connects the potential of the glass membrane to the potential of the electrical wire leading out of the electrode.

The potential measured by the pH-electrode is compared to a reference potential provided by a reference electrode, typically an Ag/AgCl-electrode immersed in a reference solution, which is indirectly in contact with the measurement solution via a junction. This conventional reference electrode will therefore always produce the same, constant potential, irrespective of the solution to be measured.

Ion sensitive electrodes with a glass membrane exhibit excellent measurement properties. pH-electrodes for example show favourable properties in terms of slope, long-term stability, selectivity and detection limit, but also have disadvantages. Classic glass electrodes can only be used in a given orientation. In addition, glass electrodes show mechanical weaknesses, as they can break easily with the result that bits of broken glass get into the measurement solution, which must strictly be avoided, particularly in processes of the food industry.

DE2220841A1 discloses an ion-sensitive electrode, in which an inner buffer solution creating a constant potential is replaced by metal deposited on an ion-sensitive glass membrane. An ion-sensitive electrode is referred to as solid-state ion-sensitive electrode, when its internal buffer is replaced by solid material. Such measures allow electrodes to be manufactured with significantly reduced dimensions, but known ion-sensitive electrodes with a solid internal buffer also show considerable drawbacks.

Due to the high impedance of ion-sensitive glass membranes, the electrical isolation of metal elements is often critical. Further, due to the exposure to ambient chemical reactants such as oxygen (O₂), water (H₂O), nitrogen (N₂), carbon dioxide (CO₂), etc., specific metal electrodes may be damaged or destroyed. Furthermore, chemical interactions between specific electrically conducting layers and the glass layer may occur, which may lead to damage or destruction of the glass layer. Still further, performance and properties of ion-selective solid-state electrodes compared to conventional ion-sensitive electrodes are still not as desired. Furthermore, limitations of the measurement range and insufficient stability with regard to pressure and temperature were experienced. Below, technical solutions known from prior art and a plurality of related problems are discussed in the detail.

US4632732A discloses a solid-state electrode with an ion-sensitive glass membrane connected to a glass tube and a solid contact material consisting of lithium-vanadium-oxide (LiₓV₂O₅), which forms an intercalation electrode. The solid contact material is sintered to the inner side of the glass membrane and electrically connected to a shielded electrode cable.

DE3727485A1 discloses another solid-state electrode with an ion-sensitive glass membrane connected to a glass tube and an intercalation electrode consisting of material also used for lithium batteries. Such intercalation electrodes may exhibit intrinsic electrochemical hysteresis, which may impair the performance of the ion-sensitive electrode. Furthermore, exposure of the electrode materials to ambient chemical reactants (such as O₂, H₂O, N₂, CO₂, etc.) may further degrade performance.

Further, with regard to using a single phase or multiphase lithium layer adjoining a thin-walled ion-sensitive glass membrane, it is important to note that studies of lithium / silicon-dioxide (Li/SiO₂) systems have shown that in these systems a substantial reduction of the glass matrix can occur, which significantly degrades the performance of the ion-selective electrode and drastically limits its lifespan.

DE19714474A1 discloses an electro-chemical sensor with an ion-sensitive glass membrane, which is in direct contact with a steel-ceramic substrate. All layers are produced by thick film technology. It is stated that in layered structures with a metal layer and a glass layer having different thermal expansion coefficients the glass layer may be damaged or even destroyed when exposed to temperature changes, which cause cracks or fissures. In order to avoid this problem, DE3727485A1 discloses the use of layers that exhibit thermal expansion coefficients α, which are identical or differ at most by a value Δα < 6 10⁻⁷ / K.

DE19714474A1 further discloses, that the problem of glass breaking occurs not only with solid-state electrodes but also with conventional glass electrodes that comprise a thin glass membrane melted to a glass shaft as described in "A guide to pH-measurement", 03/2016, Mettler-Toledo GmbH. In order to avoid glass breakage with this type of electrodes it is recommended in DE19714474A1 that the adjoining materials exhibit thermal expansion coefficients α, which are identical or differ at most by a value Δα < 7 10⁻⁷/ K. Hence, the problem of glass breakage occurs in various embodiments of known electrodes comprising a thin-walled ion-sensitive glass membrane.

DE19620568A1 discloses an ion-sensitive glass electrode comprising a double layer glass membrane with an inner glass layer with electronic and ionic conductivity and an ion-sensitive glass layer facing the measurement solution. The glass layers are melted together and form a thin walled spherical or cylindrical membrane, which is attached or melted to one end of a glass electrode shaft having a linear thermal expansion coefficient matching those of the glass layers, see DE2220841A1. The inner surface of the electrode body, formed by the membrane and the electrode shaft, is completely covered with a solid adherent silver layer connected to a contact wire. Inside the electrode body an elastic support body is provided that preferably is made of silicone rubber. The elastic support body has a sealing function, which is sufficient for the materials used, but would scarcely fulfil the sealing requirements of materials that are easily reacting with ambient chemical reactants.

DE10018750C2 discloses another ion-sensitive glass electrode comprising a glass membrane with an outer side in contact with a measurement solution and with an inner side in firm contact with a metal contact layer, which is connected to an internal conductor.

US4133735A discloses an ion-sensitive electrode with a substrate having a planar wafer surface, on which a continuous conducting layer is formed by either thin-film vapour deposition or thick-film screening processes. A first region of the continuous conducting layer and related portions of the wafer surface are covered by a continuous membrane layer of a pH-sensitive glass. An insulated connecting lead is connected directly to a second region of the conducting layer. Alternatively, an electronic device chip with output leads is bonded to the wafer and connected with its input via the connecting lead to the second region of the conducting layer. The exposed conducting elements of the electrode, including the second region of the conducting layer, the active device chip, and all exposed portions of the leads, are covered by a protective fluid-tight seal. The seal may be formed from a flattened, non-pH-sensitive glass tube, which is filled with a cured epoxy resin. Alternatively, the seal may be formed from heat-shrinkable tubing, e.g. composed of polyvinyl chloride, filled with an appropriate hydrophobic potting material such as beeswax. A sealing of this type, which is typically used in the art, does not satisfy the demands of electrode materials that are more sensitive to the exposure of ambient chemical reactants (such as O₂, H₂O, N₂, CO₂, etc.).

US4280889A discloses a solid-state ion-sensitive electrode using silver/silver chloride (Ag/AgCl) electrodes as reference electrode and as pH measuring electrode, which can be provided as separate units or combined in a common encapsulation. For both electrodes, a layered structure with an insulating substrate is provided, on which a first layer of chromium followed by a second layer of silver, a third layer of silver chloride and a final ion sensitive glass layer are deposited. For the pH measuring electrode, the thermal expansion coefficients of the glass layer and the adjoining layer of silver chloride are matched, so that cracks in the glass layer are avoided. For the reference electrode, the thermal expansion coefficients of the glass layer and the adjoining layer of silver chloride are not matched, so that cracks in the glass layer are randomly caused during temperature cycling of the reference electrode. These cracks provide ion conduction paths to the silver chloride layer from an aqueous solution in which the reference electrode is immersed during ion concentration measurements. US4280889A therefore teaches matching thermal expansion coefficients of adjoining layers of a layered structure in order to avoid cracks in the glass layer and not matching adjoining layers of a layered structure to create cracks fulfilling a specific function.

EP0420983A1 discloses a solid phase electrode with an ion-sensitive membrane connected to a glass tube and that is provided with a solid phase contact made of an oxide compound on the side facing the glass tube.

WO/0104615A1 discloses a solid-state electrode comprising a metal core of a lithium alloy, which adheres firmly to the inner face of an ion-sensitive glass membrane that is containing lithium, and which is melted to a lower end of a glass tube made of conventional glass. The metal core is protected from ambient influences by means of a metal sealing plug inserted into the glass tube. However, it appears that this kind of sealing is not optimal, as ambient chemical reactants (such as O₂, H₂O, N₂, CO₂, etc.) may intrude through capillaries remaining between the inside of the glass tube and the outside of the metal core. Such capillaries may typically result through changes of the ambient temperature e.g. during measurement processes.

US4440620A discloses a measuring electrode device with a pH electrode arranged within an outer casing and having a pH sensitive member in contact with an electrolyte housed in the outer casing. The electrolyte reacts with a predetermined gas in a liquid to be inspected and varies its pH. The pH sensitive member includes a semiconductor substrate and a pH sensitive membrane formed on the substrate and in contact with the electrolyte. A potential difference is produced between the pH sensitive membrane and the electrolyte in accordance with the variation of the pH of the electrolyte. Thus, a potential difference is produced between the pH electrode and a reference electrode according to the variation of the pH of the electrolyte.

US3700577A discloses a pH-sensing glass electrode device including a thin pHsensitive glass membrane having its back surface deglazed to form therein minute recesses, and a thin layer of an electrically-conductive crystalline metal intimately adhered to said de-glazed back-surface and entering such minute recesses.

US3923625A discloses a reinforced electrode structure for measuring the concentration of an ionic species in an ion containing solution. A thin film conductive electrode is strongly bonded to one surface of a thin membrane of glass sensitive to the ionic species. A conductive lead wire makes electrical contact with the electrode. A mass of non-conductive reinforcing backing material having a thermal coefficient of expansion greater than that of the membrane strongly adheres to the conductive electrode and the membrane. The backing material is cured or solidified at a temperature sufficiently higher than the temperature at which the electrode structure is to be used so that contraction of the backing material during curing places the membrane in a state of compression, thereby strengthening the same.

Hence, known solid-state ion-sensitive electrodes have several drawbacks. Critical are drawbacks related to the destruction of the materials used or layers when exposed to ambient chemical reactants, the destruction of the ion-sensitive glass membrane when exposed to the adjoining metal layers or the destruction of metal layers when exposed to ambient chemical reactants. Critical is also the impact of mechanical forces and tensions during handling and operation of the ion-sensitive electrode, which may lead to damages of the glass membrane, such as cracks and fissures.

Therefore, the object of the invention is defining an improved solid-state measurement unit for an improved ion-sensitive solid-state electrode, in particular an improved solid-state pH-electrode, and an improved ion-sensitive solid-state electrode that is equipped with this solid-state measurement unit.

The solid-state ion-sensitive electrode equipped with the solid-state measurement unit shall have an improved performance, robustness and durability. The elements of the ion-sensitive electrode shall be well protected against ambient chemical and physical influences, when being stored, handled or used for measurement purposes.

The measurement unit, which is intended for an ion-sensitive solid-state electrode, such as a pH-electrode, and which serves to measure an ion activity in a measuring solution, comprises a layered solid-state structure with an ion-sensitive glass layer provided with a first ring-shaped contact surface, with an electrically conducting layer that directly or via at least one intermediate layer adheres to the ion-sensitive glass layer, and with a substrate that adheres to the electrically conducting layer and is provided with a second ring-shaped contact surface. The measurement unit further comprises a holding member that is provided with a first ring-shaped sealing surface, a second ring-shaped sealing surface and an annular section, wherein the first ring-shaped sealing surface is sealingly connected to the first ring-shaped contact surface and wherein the second ring-shaped sealing surface is connected to the second ring-shaped contact surface, and wherein the first and second ring-shaped sealing surfaces are sealingly connected by the annular section of the holding member. The first and second contact surfaces and the first and second sealing surfaces are ring-shaped or loop-shaped and form closed loops with any suitable form, preferably a circular, rectangular, oval or any other curved form.

Two separate contact regions of the holding member are sealingly connected to the substrate, a first region to the ion-sensitive glass layer and a second region to the substrate. The layers of the layered structure are therefore hermetically sealed from the outer environment, thus inhibiting access of ambient chemical reactants such as O₂, H₂O, N₂, CO₂, etc. to the contact regions of the layers of the layered structure, particularly to the sensitive electrically conducting layer and any intermediate layer.

Hence, hermetically sealing the layered structure allows the use of materials that otherwise may easily be destroyed by exposure to ambient chemical reactants. Furthermore, as the electrically conducting layer and, if present, the at least one intermediate layer are perfectly protected, these layers can be applied with a minimum thickness, preferably in the range from 10 nm to 10 µm, using any deposition process, such as PVD and/or electroplating, on the substrate or the glass layer, which serve as a carrier for the deposited material.

In an embodiment, the holding member comprises ceramic or glass. The solid-state measurement unit can therefore be integrated into any structure of any ion-sensitive electrode. Furthermore, the applied technology allows the solid-state measurement unit to be designed practically with any desired dimensions. Due to the rigidity and improved encapsulation, the solid-state measurement unit can be applied in any processes, such as industrial processes with high demand.

The substrate comprises at least one of the following materials: metal, steel, ceramic, glass, glass ceramic, polymer compound, fibre composite material. The substrate is preferably disk shaped. Further, the substrate has a thickness preferably in the range of 0.2 mm - 1.5 mm, selected according to the mechanical stability required.

The electrically conducting layer comprises a metal or metal alloy, preferably an alkali metal or alkali metal alloy, such as lithium or a lithium alloy, with a reduction potential of at least 1.0 V. The substrate and the electrically conducting layer may be a unitary part with homogeneous material over the whole cross-section. The electrically conducting layer may also be an integral part of the substrate, wherein one side exhibits specific metallic properties and maybe coated for example by a film of metal, preferably alkali metal or an alloy comprising alkali metal.

The intermediate layer, if present, is preferably made of a solid-state electrolyte that conducts ions released from the electrically conducting layer. In an embodiment, the electrically conducting layer comprises or consists of lithium or a lithium alloy, so that the intermediate layer would transfer lithium ions. An intermediate layer, comprising a solid-state electrolyte, separates the electrically conducting layer, comprising lithium or a lithium alloy, from the ion-sensitive glass layer or glass membrane, so that a reduction of the glass matrix by the material of the electrically conducting layer is avoided.

The ion-sensitive glass layer is made of a glass that preferably conducts ions of the electrically conducting layer. If the electrically conducting layer comprises or consists of lithium or a lithium alloy then the ion-sensitive glass layer would transfer lithium ions.

In an embodiment, the first and second ring-shaped sealing surfaces and/or the first and second ring-shaped contact surfaces form circular closed loops and/or are arranged concentrically or offset from one another. Arranging the ring-shaped sealing surfaces and the ring-shaped contact surfaces in closed loops ensures perfect sealing.

In another embodiment, the preferably disc shaped substrate has an upper side facing a lower side of the holding member. With its lower side the substrate faces the electrically conducting layer, if present the intermediate layer, and the upper side of the ion-sensitive glass layer. The ion-sensitive glass layer faces with its lower side the measurement solution.

The layered structure is preferably provided with a first stepped profile with the ion-sensitive glass layer having a diameter that is larger than the diameter of the substrate, preferably that of the adjoining electrically conducting layer, and if present that of the at least one intermediate layer. The first stepped profile of the layered structure complements a second stepped profile provided at the lower side of the holding member. Using first and second stepped profiles that are complementing one another has multiple advantages. Arranging the connections between the holding member and the ion-sensitive glass layer and the holding member and the substrate on different levels ensures good separation between these connections. Further, mechanical engagement between the stepped profiles increases mechanical stability. Still further, the use of stepped profiles avoids the requirement of a larger displacement of the connecting zones relative to the central axis of the measurement unit, which therefore can be manufactured with smaller dimensions.

Further, particularly with the stepped profiles, the first ring-shaped contact surface can be located on the upper side of the ion-sensitive glass layer and the second ring-shaped contact surface can be located on the upper side of the substrate. This arrangement facilitates assembly and manufacturing processes, in particular the position processes, mounting processes as well as fusing or melting processes.

The first ring-shaped sealing surface of the holding member is preferably arranged in a first plane and the second ring-shaped sealing surface of the holding member is arranged in a second plane, which first and second planes are aligned in parallel to the substrate preferably with a distance between one another that corresponds at least approximately to the thickness of the substrate plus the thickness of the electrical conducting layer and, if present, the at least one intermediate layer. The planar arrangement of the layers and sealing and contact surfaces further facilitates manufacturing processes.

Various processes and materials can be used for bonding the first ring-shaped sealing surface and the first ring-shaped contact surface of the ion-sensitive glass layer as well as the second ring-shaped sealing surface and the second ring-shaped contact surface of the substrate with one another.

Bonding may be accomplished by diffusion of the adjoining ring-shaped sealing and contact surfaces. Preferably, the ring-shaped sealing and contact surfaces are arranged on material that is suitable for diffusion bonding under a suitable process temperature.

A bonding connection may use bonding material comprising glass that is arranged, melted and solidified between the adjoining ring-shaped sealing and contact surfaces. The applied glass bonding material preferably diffuses into the ring-shaped sealing and contact surfaces, thus establishing a unitary bridge or bond between the ring-shaped sealing and contact surfaces. The glass bonding material is preferably a sealing glass paste that may be dispensed or screen printed onto the ring-shaped sealing surfaces and/or the ring-shaped contact surfaces and that is then sealed to or fused with the adjoining sealing and contact surfaces by applying at least one thermal cycle with which the glass bonding material and/or the adjoining materials are heated to the sealing temperature.

A bonding connection may also consist of a bonding material comprising metal that is arranged, melted and solidified between the adjoining ring-shaped sealing and contact surfaces.

Preferably, bonding is established by creating several layers, which optionally include an adhesion layer, for example comprising or consisting of Ti, Cr or TiW, with a thickness in the range of 10 nm to 500 nm, that is used to establish adhesion with the corresponding ring-shaped sealing or contact surface. Optionally a stress relief layer is provided for example comprising or consisting of Cu, with a thickness in the range of 100 nm to 2000 nm, which serves to absorb compressive or tensile stress occurring within the layered structure. Preferably, a wetting/barrier layer for example comprising or consisting of nickel (Ni), nickel-vanadium (NiV), nickel-phoshor (NiP), with a thickness in the range of 100 nm to 5000 nm, and/or an oxidation protection layer for example comprising or consisting of gold (Au), with a thickness in the range of 10 nm to 200 nm, are provided in addition. Optionally a solder layer is plated on top, for example comprising or consisting of tin (Sn), tin-silver (SnAg), tin-gold (SnAu), indium (In) based alloy or any other suitable soldering alloy. Materials for the soldering layer are selected that have an acceptable processing temperature so that layers or material of the layered structure are not impaired or overheated during bonding processes.

In further embodiments, bonding material is deposited in form of preforms, such as a first annular sealing preform placed between the first ring-shaped sealing surface and the first contact surface, as well as a second annular sealing preform placed between the second ring-shaped sealing surface and the second contact surface. The preforms made of glass or metal are then melted and solidified. Said preforms comprise or consist of a single material but may also comprise a plurality of materials or an alloy. Furthermore, a preform may consist of a single layer or a plurality of layers, such as at least one of the following layers: an adhesion layer, a stress relief layer, a wetting/barrier layer, an oxidation protection layer, and/or a solder layer. These layers can be selected and combined according to the specific requirements.

As mentioned, the process temperatures T_{P} applied to the layers of the layered structure are selected to be above the maximum operating temperature T_{Omax} of the measurement unit. Preferably, the process temperature T_{P} is by a factor k higher than the maximum operating temperature T_{Omax} of the measurement unit; which factor k = T_{P} / T_{Omax} is preferably in the range of 1.1 to 2.0 or more. The ratio would typically be in the range of 1.1 to 1.3 for tin solder. The ratio would typically be in the range of 1.4 to 1.5 for a glass frit.

The measurement unit according to the invention preferably comprises an electrical module, such as a rigid or flexible PCB that may be used to collect, distribute and/or process information or signals. The electric module may comprise a processing unit and interfaces, with which electrical devices can be controlled or signals, e.g. received from a connected sensor can be processed. Preferably, the electrical module is connected to a thermal sensor. The electrical module is placed on the upper side of the substrate and is preferably connected by reflow soldering. For this purpose, the upper side of the substrate, e.g. a metal disc, is provided with a solderable layer, e.g. a Ni/Au layer.

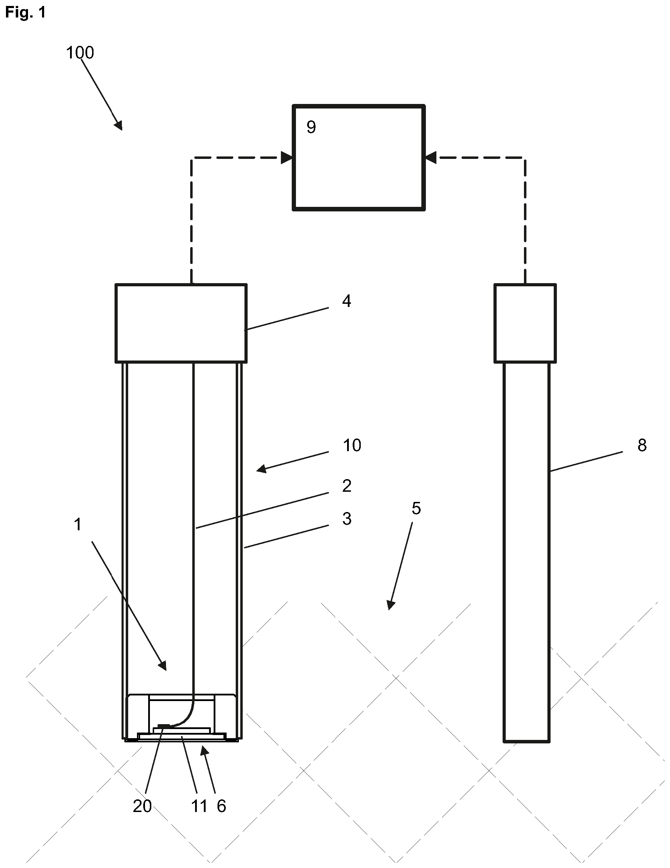

The holding member has preferably a tubular or an annular form, which encloses a cavity or hollow space. As described above, at the lower side, the holding member exhibits a stepped profile arranged in a circle, to ensure that the layered structure is completely surrounded and hermetically sealed. The electrical module is preferably accessible. Furthermore, a lead-off wire connected to the electrical module or to the layered structure, preferably the electrically conducting layer, and optionally other wires can pass through. After assembly, the hollow space is filled and sealed with a moulding compound, such as an epoxy compound, which covers the upper side of the substrate and, if present the electrical module. The moulding compound preferably laterally adjoins the sealingly connected second ring-shaped sealing surface and the second contact surface, which are fused to one another, so that a dual stage sealing results. The holding member may be a long tube or a relatively small hollow cylindrical part, which can be mounted within a tube of an ion-sensitive electrode. In other words, in an embodiment the holding member may be a main part of the ion-sensitive electrode, which needs to be closed by a cap only. In another embodiment, the holding member is held at the front side of the main part of the ion-sensitive electrode (see Fig. 1 below).

In another embodiment, the ion-sensitive glass layer is kept under compressive stress over the whole range of the operating temperature of the measurement unit. While in the prior art any mechanical stress is avoided in order to avoid cracks and fissures, the inventive solution intentionally pressurises the ion-sensitive layer. The ion-sensitive layer is always and preferably over the whole range of operating temperatures kept under compressive stress with forces pointing to the centre of the ion-sensitive layer by applying pressure mechanically. By this measure, which is not limited to solid-state electrodes the occurrence of cracks and fissures are avoided.

Creating compressive stress within an ion-sensitive glass layer or glass membrane can be achieved in different ways. The ion-sensitive layer can be mounted under pressure. In further embodiments as discussed below compressive stress in the ion-sensitive membrane is created by the connection to a mounting element, which after connection contracts to a desired extent, thereby exerting preferably radial forces onto the ion-sensitive glass layer, which is preferably a circular element, such as a disc. The desired stress state is a biaxial stress or more specifically an equibiaxial stress. In this state every element of the ion-sensitive membrane is under the same pressure from all sides (in a plane). In the layered structure, materials with suitable thermal expansion coefficients are preferably selected for the dominant layers, which under thermal treatment expand and after contraction pressurise the connected ion-sensitive glass layer. Alternatively or in addition, materials with suitable thermal expansion coefficients are selected for the holding member and the ion-sensitive glass membrane, which under thermal treatment expand and after contraction put pressure on the connected ion-sensitive glass layer.

The materials are preferably selected such that the thermal expansion coefficient of the ion-sensitive glass layer is smaller than the thermal expansion coefficient of the substrate. The ion-sensitive glass layer and the substrate are then connected or deposited upon one another, with the electrically conducting layer and optionally at least one intermediate layer in between, at a process temperature above the maximum operating temperature of the measurement unit, which is typically around 150° C. Of course, not only finished layer units can be connected in this way, but layers can also be produced or built partially or completely by any thin-film or thick film technology at the selected process temperature.

After connecting the ion-sensitive glass layer and the substrate typically via the electrically conducting layer and the intermediate layer, if present, the process temperature is lowered and the ion-sensitive glass layer and substrate will contract accordingly. Due to the higher thermal expansion coefficient the substrate will contract stronger than the ion-sensitive glass layer and will exert corresponding forces or pressure onto the ion-sensitive glass layer. These contraction forces applied by the substrate are typically radially aligned and typically point to the centre of the ion-sensitive glass layer. As the planar connection between the substrate and the ion-sensitive glass layer was established at the first process temperature, e.g. around 300° C, the ion-sensitive membrane will always exhibit compressive stress regardless of the temperature currently present during measurement. The first process temperature is above the temperature of the measurement processes, which will typically not exceed 150° C. The constantly pressurised glass layer is stabilised and will not exhibit cracks or fissures during thermal cycles or normal mechanical handling.

The connection of the holding member and the ion-sensitive glass membrane, which have different thermal expansion coefficients, is done analogously. Connection of the first ring-shaped sealing surface of the holding member and the first ring-shaped contact surface of the ion-sensitive glass layer is done at a process temperature above the maximum operating temperature of the measurement unit.

Process temperatures are always selected with regard to the materials used for the layered structure and the holding member. The differences of the thermal expansion coefficients and the related materials are selected according to the given requirements and the conditions of use of the ion-sensitive electrode. In order to maintain compressive stress in the ion-sensitive glass layer over the whole range of the operating temperature, i.e. the ion-sensitive membrane, the material of the ion-sensitive glass layer and the material of the substrate and and/or the material thermal expansion coefficient of the ion-sensitive glass layer and the material of the holding member are selected such that the related thermal expansion coefficients of the adjoining materials differ by a value preferably in the range from 1 % -12.5 %. Typically, a value is selected in the range from 7.5 % -11.5 %. While it is desired to maintain the compressive stress in the ion-sensitive glass layer over the whole range of the operational temperature applied during the measurement processes, significant reduction of undesirable stress in the ion-sensitive glass layer is also accomplished when the range of the operation temperature is not fully covered. In the event that peak temperatures are seldom reached, such peak temperatures may be disregarded if other requirements need to be taken into account as well.

The technical solution, as well as other beneficial advantages, of the present invention will be apparent from the following detailed description of an embodiment of the present invention, with reference to the attached drawing.

In the drawings
- Fig. 1: shows a measurement system 100 with an inventive ion-sensitive electrode 10 equipped with an inventive solid-state measurement unit 1 and a reference electrode 8 immersed in a measurement solution 5;
- Fig. 2: shows in a sectional view the solid-state measurement unit 1 of Fig. 1 held above the measurement solution 5, with a layered structure 6 that is connected to a holding member 18 and that comprises an ion-sensitive glass layer 11 connected via an intermediate layer 12 to an electrically conducting layer 13, which adheres to a substrate 14;
- Fig. 3: shows the measurement unit 1 of Fig. 2 in exploded view;
- Fig. 4a: shows the ion-sensitive glass layer 11 and the holding member 18 of the measurement unit 1 of Fig. 2 before connecting to one another optionally by means of an annular preform 151;
- Fig. 4b: shows the expanded ion-sensitive glass layer 11 and the expanded holding member 18 of Fig. 4a while being connected to one another at a process temperature well above the maximum operating temperature of the measurement unit 1;
- Fig. 4c: shows the contracted ion-sensitive glass layer 11 and the contracted holding member 18 of Fig. 4b connected to one another, e.g. by means of an annular preform 151, at room temperature with a pressure with radially acting forces applied by the holding member 18 onto the ion-sensitive glass layer 11;
- Fig. 5a: shows the ion-sensitive glass layer 11 and the substrate 14 of the measurement unit 1 of Fig. 2 with an optionally separated electrically conducting layer 13 and at least one optional intermediate layer 12 before being connected to one another;
- Fig. 5b: shows the expanded ion-sensitive glass layer 11 and the expanded substrate 14 of Fig. 5a with the electrically conducting layer 13 and the at least one optional intermediate layer 12 attached to the ion-sensitive glass layer 11, while being connected to one another at a process temperature well above the maximum operating temperature of the measurement unit 1;
- Fig. 5c: shows the contracted ion-sensitive glass layer 11 and the contracted substrate 14 with the electrically conducting layer 13 and the at least one optional intermediate layer 12 of Fig. 5b connected to one another at room temperature with a pressure with radially acting forces applied by the substrate 14 onto the ion-sensitive glass layer 11;
- Fig. 6: shows in expanded view the layered structure 6 of Fig. 5c and the expanded holding member 18 together with two sealing preforms 151, 152, while being connected to one another at a process temperature well above the maximum operating temperature of the measurement unit 1.

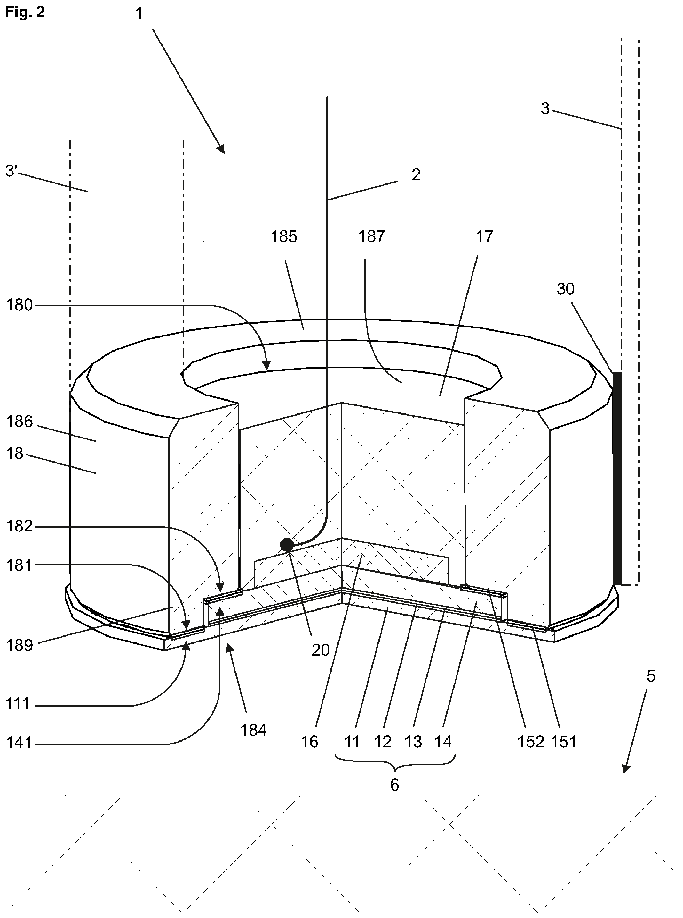

Fig. 1 shows schematically a measurement system 100 with an inventive ion-sensitive solid-state electrode 10, e.g. a pH-electrode, equipped with an inventive solid-state measurement unit 1 and a reference electrode 8 immersed in a measurement solution 5. The ion-sensitive electrode 10 comprises an electrode head 4, which preferably encloses at least part of a required measurement circuit that is connected to a first signal input port of a control unit 9, possibly a so-called transmitter, which comprises a second signal input port, to which the reference electrode 8 is connected. Connection of the ion-sensitive electrode 10 and the reference electrode 8 to the control unit 9, which may comprise a display unit, is established by wire or wireless, e.g. inductively or by means of a wireless network. The electrode head 4 of the ion-sensitive electrode 10 is connected to the upper end of a tubular electrode body 3, which at the lower end is connected to the inventive measurement unit 1. The measurement unit 1 comprises a layered structure 6 with an ion-sensitive glass layer 11 exposed to the measurement solution 5. On the side facing the electrode head 4, the measurement unit 1 is provided with an electrical contact 20, possibly provided on an electrical module 16, such as a printed circuit board, (see Fig. 2). The electrical contact 20 is connected to a lead-off wire 2, which connects the measurement module 1 to the electrode head 4. Circuitry for processing the measured signal may be provided in the electrical module 16 and/or in the electrode head 4 and/or or in an external device.

Fig. 2 schematically shows in a sectional view the solid-state measurement unit 1 of Fig. 1 held above the measurement solution 5, with a layered structure 6 that is connected to a holding member 18 and that comprises an ion-sensitive glass layer 11 connected via an intermediate layer 12 to an electrically conducting layer 13, which adheres it to a substrate 14.

In the embodiment of a pH-electrode, the ion-sensitive glass layer 11 may be provided with a known pH-sensitive glass composition, such as is also suitable for glass membranes of conventional non-solid-state pH-electrodes. The ion-sensitive glass layer 11 is preferably provided in the embodiment of a glass wafer, which preferably exhibits a thickness in the range between 0.05 mm and 1 mm or higher. In an embodiment the ion-sensitive glass layer 11 is deposited by a known thin-film technology, e.g. by sputtering, onto the intermediate layer 12, the electrically conducting layer 13 or directly onto the metal substrate 14, in which the electrically conducting layer 13 maybe integrated. However, as only a thin electrically conducting layer 13 is required, this electrically conducting layer 13 is preferably applied to the substrate 14 by thick-film or thin-film technology as well. The intermediate layer 12, if present, is preferably applied by thick-film or thin-film technology to the electrically conducting layer 13 or to the substrate 14, if the electrically conducting layer 13 is an integral part of the substrate 14. The sequence of building up the layers 11, 12, 13, 14 may also be reversed. It is also possible to connect any two layers 11, 12 or 12, 13 or 13, 14 in pairs that are further connected. For example, the layers 12 and 13 may be connected to each other, before being connected to layer 11 or 14. The intermediate layer 12 may be applied to the ion-sensitive glass membrane 11 or to the electrically conducting layer 13.

In an embodiment, the holding member 18, which preferably exhibits a maximum electrical resistance, is made of ceramic or glass. The substrate 14 preferably comprises at least one of the following materials, metal, steel, ceramic, glass, glass ceramic, polymer compound, or fibre composite material. The electrically conducting layer 13 comprises a metal or metal alloy with a reduction potential of at least 1.0 V, preferably an alkali metal or a compound containing alkali metal, such as lithium or a lithium alloy. The intermediate layer 12, if present, is made of a solid-state electrolyte that preferably conducts ions of the electrically conducting layer 13, such as lithium ions. The ion-sensitive glass layer 11 is made of a glass that preferably conducts ions of the electrically conducting layer 13, such as lithium ions. Described below are materials and processes for manufacturing the layered structure 6.

In an embodiment, the electrically conducting layer 13 consists of lithium or a lithium alloy. The intermediate layer 12, which may be applied to this electrically conducting layer 13 or to the ion-sensitive glass layer 11, is a solid-state electrolyte layer that is conducting lithium ions. The electrolyte layer may consist of or may comprise for example: lithium borate, such as B₂O₃-Li₂O, lithium borat-sulphate (LiBSO), such as B₂O₃ - 0.8Li₂O - 0.8Li₂SO₄, lithium borophosphate (LiOP), such as $\frac{1}{2} \times {Li}_{2} O - {BPO}_{4}$, generally Li₂O - B₂O₃ -P₂O₅, lithium-aluminate, such as Li₅AlO₄, lithium-borosilicate, such as Li₂O-B₂O₃-SiO₂, lithium-gallium oxide, such as Li₅GaO₄, lithium-germanate, such as Li₍₄₋₃ₓ₎AlₓGeO₄, lithium-phosphate, such as Li₍₁₊ₓ₎Ti₂SiₓP₍₃₋ₓ₎O₁₂ or Li₍₁₊ₓ₎MₓTi₍₂₋ₓ₎(PO₄)₃ with M=Al, Ga, Fe, Sc, In, Lu, Y, La, lithium-phosphorus-pxynitride, such as Li₃PO₄₋ₓNₓ, lithium-silicate-aluminate, such as LiAlSi₂O₆, LiAlSiO₄, Li₉SiAlO₈, lithium-silicate, such as Li₂SiO₄, Li₄SiO₄, Li₂SiO₃, Li₂Si₂O₅, lithium-silicon phosphate, such as Li_{3.6}Si_{0.6}P_{0.4}O₄, lithium-silicon-phosphorus-oxynitride, such as Li₄SiO₄₋ₓ-Li₃PO_{4-y}N_{x+y}, lithium-thio-germanate, Li₂GeS₃, Li₄GeS₄, Li₆GeS₅, lithium-titanate, such as Li₂Zr₍₁₋ₓ₎TiₓO₃, lithium-vanadate, lithium-compounds, such as Li₂S-SiS₂-Li₃PO₄ or Li₇P₃S₁₁, lithium-zinc oxides, such as Li₆ZnO₄, lithium-boron-oxynitride (Li-B-O-N), such as Li_{3.09}BO_{2.53}N_{0.52}, sulphides, such as Li₂S - GeS₂, and thio-lithium-germanium-compound, such as Li₁₀GeP₂S₁₂, Li_{3.25}Ge_{0.25}P_{0.75}S₄, or mixtures thereof.

In an embodiment, the solid-state electrolyte layer 12 comprises an alkali metal-solid-state electrolyte compound, particularly a lithium-phosphorus-oxynitride-compound (LiPON), which is applied for example by sputtering. Further, thin-film processes suitable for applying the solid-state electrolyte layer 12 are for example: pulsed laser deposition, magnetron sputtering, reactive magnetron sputtering, CVD, vapour deposition, reactive vapour deposition, procedures, and plasma assisted chemical vapour deposition, such as plasma assisted CVD or vacuum plasma spray coating. The solid-state electrolyte layer 12 preferably exhibits a layer thickness in the range from 50 nm to 5000 nm or higher. Most suitable are layer thicknesses in the range from 100 nm to 1000 nm.

Subsequently the electrically conducting layer 13, which comprises an alkali metal such as metallic lithium, i.e. pure lithium, an alloy comprising lithium-(0) or a lithium-solid-state compound, is applied to the solid-state electrolyte layer 12. The layer thickness of the electrically conducting layer 13 is preferably in the range between 10 nm to 10 µm or higher.

As described above, the measurement principle of the inventive ion-sensitive electrode 10 and the solid-state measurement unit 1 is based on the ionic reaction between the measurement solution 5 and the ion-sensitive glass layer 11. The ion conducting solid-state electrolyte layer 12 supports a reversible redox reaction between ionic and metallic lithium at the interface between the solid-state electrolyte layer 12 and the electrically conducting layer 13, so that a measurement signal is provided at a suitable electrical contact, which is provided at the electrically conducting layer 13. Damage to the ion-sensitive glass layer 11, which is separated from the electrically conducting layer 13 by the intermediate layer, i.e. the solid-state electrolyte layer 12, is avoided.

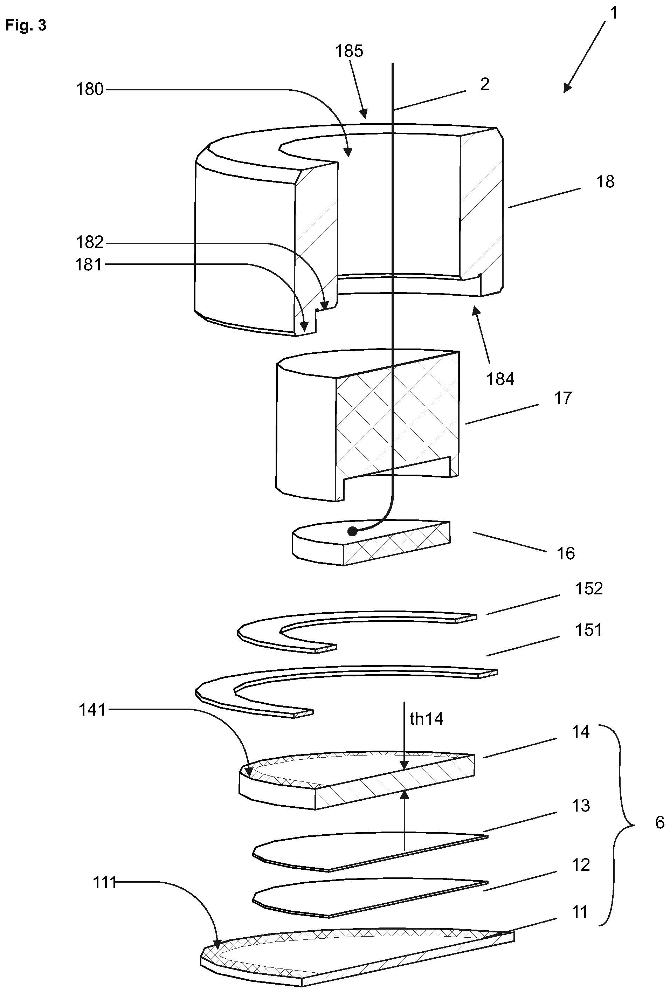

As materials used for the layered structure 6, such as lithium for the electrically conducting later 13, are highly reactive to ambient chemical reactants such as O₂, H₂O, N₂, CO₂, etc., the measurement unit 1 is provided with a hermetic encapsulation, which prevents such chemical reactants from entering the measurement unit 1. At the same time it is important, that direct electric contact as well as leakage currents are avoided. This is achieved with the encapsulation of the layered structure 6, which will be described with reference to Fig. 2 and to Fig. 3, which shows the measurement unit 1 in exploded view.

Fig. 2 shows that the ion-sensitive glass layer 11 of the layered structure 6 is provided with a first ring-shaped contact surface 111 and that the electrically conducting layer 13 is provided with a second ring-shaped contact surface 141. At its lower side 184 facing the layered structure 6, the holding member 18 is provided with a first ring-shaped sealing surface 181 that is sealingly connected to the first ring-shaped contact surface 111 of the ion-sensitive glass layer 11, and it is provided with a second ring-shaped sealing surface 182 connected to the second ring-shaped contact surface 141 of the substrate 14. The first ring-shaped sealing surface and the second ring-shaped sealing surface 182 of the holding member 18 are sealingly connected by an annular section 189 of the holding member 18.

The holding member 18 has an annular shape with a circular wall having an outer side 186 and an inner side 187, and it has a stepped profile at the lower side 184, which is facing the layered structure 6. The annular section 189 is therefore an integral part of the circular wall of holding member 18. Due to the stepped profile the first and second sealing surfaces 181, 182 are laterally joined to one another and are vertically displaced from one another. The measurement unit 1 can therefore be built in small dimensions.

Due to the hollow cylindrical shape of the holding member 18, the first and second ring-shaped sealing surfaces 181, 182 and the thereto corresponding first and second ring-shaped contact surfaces 111, 141 of the ion-sensitive glass layer 11 and the substrate 14 form circular closed loops that are arranged concentrically to one another.

Further, the disc shaped substrate 14 has an upper side facing the lower side 184 of the holding member 18 and a lower side facing the upper sides of the electrically conducting layer 13, the upper side if present, of the at least one intermediate layer 12, and the upper side of the ion-sensitive glass layer 11, which faces with its lower side the measurement solution 5. The first ring-shaped contact surface 111 is located on the upper side of the ion-sensitive glass layer 11 and the second ring-shaped contact surface 141 is located on the upper side of the substrate 14. Both ring-shaped contact surfaces 111, 141 are provided on the upper side of the layered structure 6 and can therefore easily be connected to the first and second sealing surfaces 181 and 182 of the holding member 18.

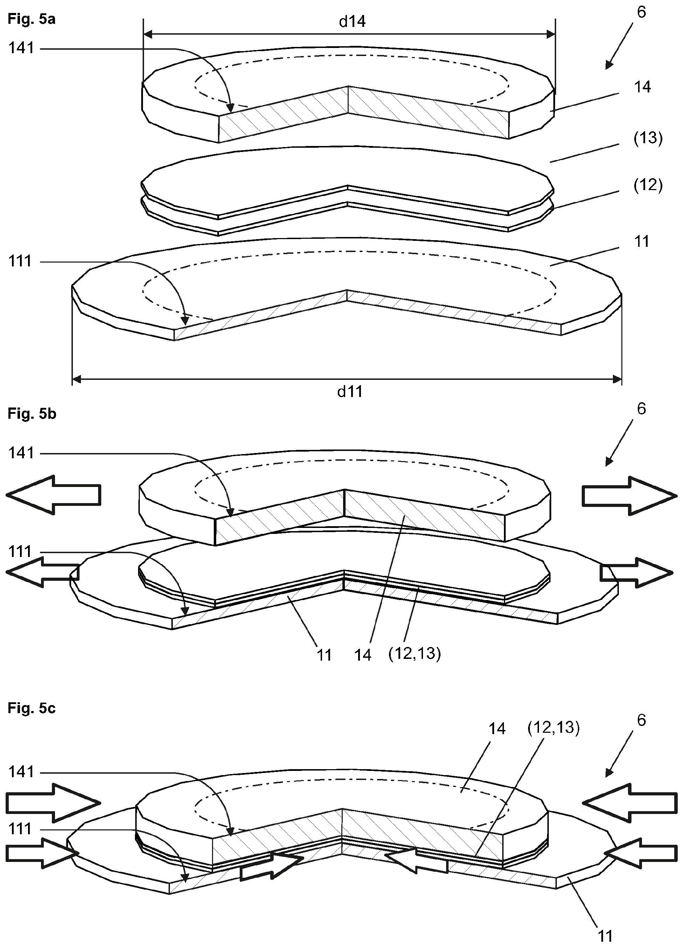

The stepped profile provided at the lower side 184 of the holding member 18 corresponds to a stepped profile of the layered structure 6 with the preferably circular ion-sensitive glass layer 11 having a diameter d11 that is larger than the diameter d14 of the preferably circular substrate 14 (see Fig. 5a). The stepped profile of the layered structure 6 and the stepped profile at the lower side of the holding member 18 therefore complement one another and provide mechanical stability to the individual layers 11, 12, 13.

The first ring-shaped sealing surface 181 of the holding member 18 is arranged in a first plane and the second ring-shaped sealing surface 182 of the holding member 18 is arranged in a second plane, which planes are aligned in parallel to the substrate 14 with a distance between one another that corresponds to the thickness th14 of the substrate 14 plus the thickness of the at least one intermediate layer 12 and the electrically conducting layer 13.

In the embodiment of Fig. 2 and Fig. 3 the holding member 18 and the layered structure 6 are connected with one another by means of a first annular sealing preform 151 placed between the first ring-shaped sealing surface 181 of the holding member 18 and the first ring-shaped contact surface 111 of the ion-sensitive glass layer 11 as well as a second sealing preform 152 placed between the second ring-shaped sealing surface 182 of the holding member 18 and the second ring-shaped contact surface 141 of the substrate 14. By thermal treatment, the annular sealing preforms 151, 152 have been melted and solidified. During the melting process, the material of the sealing preforms 151, 152 is diffusing into the neighbouring surfaces 181, 111; 182, 141 and establishes contact bridges of preferably unified material so that the layered structure 6 is hermetically closed and encapsulated. The ion-sensitive glass layer 11, the holding member 18 and the substrate 14 form practically a unity that is hermetically enclosing the electrically conductive layer 13 and, if present, the intermediate layer 12. The annular connecting bridge between the ion-sensitive glass layer 11 and the substrate 14, which includes the melted sealing preforms 151, 152 and the holding member 18, has a very high electrical resistance and therefore suppresses any leakage current.

As described above, connections between the layered structure 6 and the holding member 18 can be established in other ways, e.g. by melting and diffusing material of the adjoining ring-shaped sealing and contact surfaces 181, 111; 182, 141. A bonding material comprising glass, e.g. a glass powder or glass paste, can also be arranged, melted and solidified between the adjoining ring-shaped sealing and ring-shaped contact surfaces 181, 111; 182, 141. Bonding material can also be deposited with any deposition process, e.g. by thick film technology and/or thin-film technology. A bonding material comprising glass, e.g. glass powder, can be used for bonding purposes. Such bonding material can be structured in several layers as described above.

Fig. 2 further shows that an electrical module 16 is placed on the upper side of the substrate 14. This electrical module 16 can contain measurement circuitry and can be connected to at least one sensor, e.g. a thermal sensor.

Still further, Fig. 2 shows that the holding member 18 has a tubular or annular form with a cavity 180 that is filled and sealed with a moulding compound 17, such as an epoxy compound, which covers the upper side of the substrate 14 and the electrical module 16 and laterally adjoins the sealingly connected second ring-shaped sealing surface 182 and second contact surface 141.

A lead-off wire 2 is connected to an electrical contact 20, which is connected to the electrically conducting layer 13 or to the electrical module 16.

Fig. 2 symbolically shows that the solid-state measuring unit 1, i.e. the holding member 18 is connected by means of an adhesive 30 to the lower end of the electrode body 3. As illustrated with dashed lines, in further embodiments, the holding member 18 could be an integral part of an electrode body 3' and could be a glass tube as used for conventional ion-sensitive electrodes, such as conventional pH-electrodes.

It has been described above that in further embodiments the ion-sensitive glass layer 11 is held under constant compressive stress, acting inward with distributed forces, preferably over the whole range of the specified operating temperature of the solid-state measurement unit 1 or the ion-sensitive electrode 10. Steps for reaching the desired state of the ion-sensitive glass layer 11 are described below.

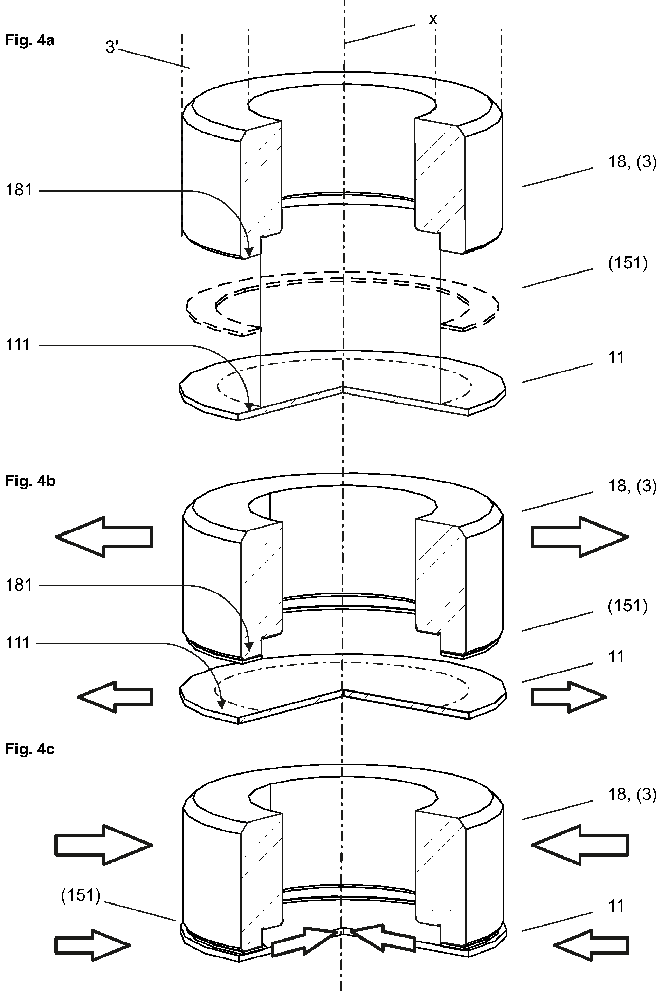

Fig. 4a shows the ion-sensitive glass layer 11 and the holding member 18 of the measurement unit 1 of Fig. 2 before being connected to one another for example by means of an annular preform 151, shown here in dashed lines. The ion-sensitive glass layer 11 is shown without the other layers 12, 13, 14 of the layered structure 6, indicating that pressurising an ion-sensitive glass layer 11 can advantageously be done also without such a layered structure 6 and therefore also in non-solid-state ion-sensitive electrodes. Consequently, the holding member 18 can be an integral part of an electrode body 3' of an ion-sensitive non-solid-state electrode and the ion-sensitive glass layer 11 can be a conventional ion-sensitive glass membrane 11. I.e., the holding member 18 can be a glass tube connected to an ion-sensitive glass membrane 11 of a conventional ion-sensitive electrode, particularly a pH-electrode, as described above with reference to "A guide to pH-measurement", 03/2016, Mettler-Toledo GmbH. For the sake of simplicity, the term ion-sensitive glass layer is used below, although such ion-sensitive glass layer can be a conventional ion-sensitive glass membrane.

In an embodiment, in order to obtain an ion-sensitive electrode with a constantly pressurised ion-sensitive glass layer the thermal expansion coefficients of the connected materials are selected as follows. The thermal expansion coefficient α₁₁ of the ion-sensitive glass layer 11 is smaller than the thermal expansion coefficient α₁₈ of the holding member 18.

As symbolically shown in Fig. 4b with arrows of different size, when heating the materials to a first process temperature the expansion of the holding member 18 will be greater than the expansion of the ion-sensitive glass layer 11. The holding member 18 and the ion-sensitive glass layer 11 are connected in this state, e.g. by melting the adjoining materials or by melting the first annular sealing preform 151 or other connecting material that has been provided between the first sealing surface 181 of the holding member 18 and the first contact surface 111 of the ion-sensitive glass layer 11. In Fig. 4b it is shown that the first annular sealing preform 151 or a functionally equivalent adhesive has been applied to the first sealing surface 181 of the holding member 18 and the ion-sensitive glass layer 11 is now connected thereto at the first process temperature. After connecting the ion-sensitive glass layer 11 to the holding member 18, the resulting structure is cooled down to room temperature. During this process, the ion-sensitive glass layer 11 and the holding member 18 contract according to their thermal expansion coefficients α₁₁, α₁₈ with the result that the contracted holding member 18 exerts a pressure with forces acting radially on the ion-sensitive glass layer 11.

Fig. 4c shows the contracted ion-sensitive glass layer 11 and the contracted holding member 18 of Fig. 4b connected to one another at room temperature with the constant pressure applied by the holding member 18 onto the ion-sensitive glass layer 11. During the use of the conventional or solid-state ion-sensitive glass electrode10 cracks and fissures are avoided, which in conventional electrodes often appear.

In solid-state embodiments of the ion-sensitive glass electrodes 10, i.e. in the inventive measurement unit 1, a pressurised ion-sensitive glass layer 11 is preferably reached by suitably selecting the thermal expansion coefficients of the layers 11, 12, 13, 14 of the layered structure 6.

Fig. 5a shows in sectional view the ion-sensitive glass layer 11 and the substrate 18 of the measurement unit 1 of Fig. 2 with an optionally separated electrically conducting layer 13 and an optional intermediate layer 12 before being connected to one another. The thermal expansion coefficient α₁₁ of the ion-sensitive glass layer 11 is smaller than the thermal expansion coefficient α₁₄ of the substrate 14. The thermal expansion coefficients α₁₂ of α₁₃ of the intermediate layer 12 and the electrically conducting layer 13 preferably corresponds to the thermal expansion coefficient α₁₄ of the substrate 14. However, they could also be selected according to the thermal expansion coefficient α₁₁ of the ion-sensitive glass layer 11 or in the range between the thermal expansion coefficient α₁₁ of the ion-sensitive glass layer 11 and the thermal expansion coefficient α₁₄ of the substrate 14. The ion-sensitive glass layer 11 and the substrate 14 are connected or deposited upon one another under a second process temperature above the maximum operating temperature of the measurement unit 1. The second process temperature may be stepped and cycled as required. Thermal energy is applied in accordance with the assembly process and under consideration of the materials used. First, the layered structure 6 is assembled and then the holding member 18 is added in another process cycle.

Fig. 5b shows the expanded ion-sensitive glass layer 11 and the expanded substrate 14 of Fig. 5a with the electrically conducting layer 13 and the at least one optional intermediate layer 12 attached to the ion-sensitive glass layer 11, while being connected at the second process temperature. In an embodiment, a first part of the electrically conducting layer 13 is applied to the substrate 14 and a second part of the electrically conducting layer 13 is applied to the intermediate layer, e.g. electrolyte layer 12. Then the layered structure 6 is assembled and hot pressed, e.g. at about 250° C, so that a diffusion bond is established between the first and second part of the electrically conducting layer 13.

Fig. 5c shows the contracted ion-sensitive glass layer 11 and the contracted substrate 14 with the electrically conducting layer 13 and the at least one optional intermediate layer 12 of Fig. 5b connected to one another at room. As symbolically shown with arrows pointing to the centre of the ion-sensitive glass layer 11, the ion-sensitive glass layer 11 remains under constant compressive stress when used within the specified range of the operating temperature, thus avoiding cracks and fissures.

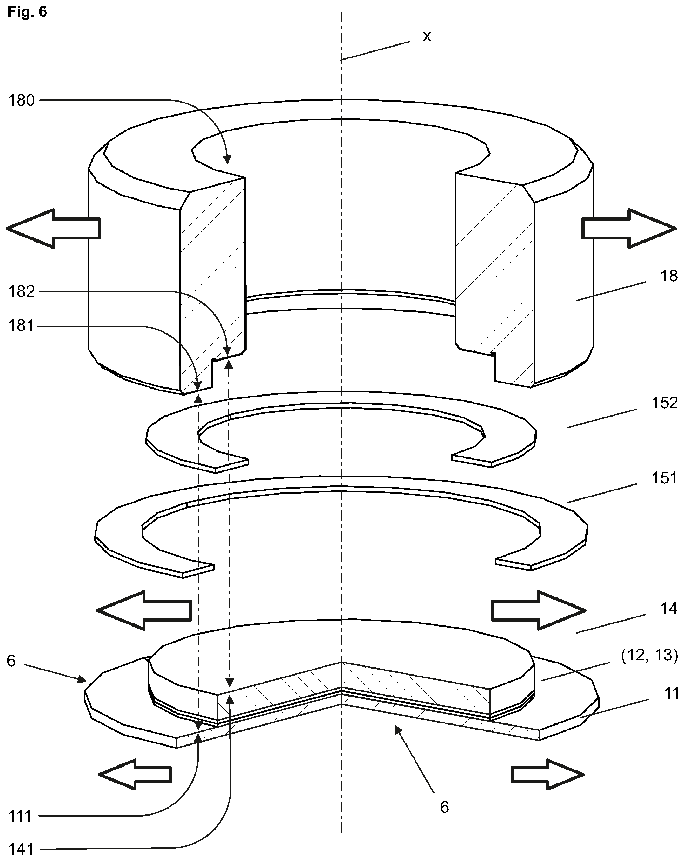

Fig. 6 shows the expanded layered structure 6 of Fig. 5c and the expanded holding member 18 together with two sealing preforms 151, 152, while being connected to one another at a process temperature, e.g. the mentioned first process temperature, which lies well above the maximum operating temperature of the measurement unit 1. After connecting the holding member 18 to the layered structure 6, both the substrate 14 and the holding member 18 hold the ion-sensitive layer 11 under constant compressive stress over the whole range of the operating temperature of the measurement unit 1.

### Reference signs list

- 1: measurement unit
- 2: lead-off wire
- 3: electrode body, e.g. glass tube
- 4: electrode head
- 5: measurement solution
- 6: layered structure
- 8: reference electrode
- 9: control unit
- 10: electrochemical sensor / pH-electrode
- 11: ion-sensitive membrane
- 12: intermediate layer
- 13: electrically conducting layer
- 14: substrate
- 16: electric module
- 17: moulding compound
- 18: holding member
- 30: adhesive
- 100: measurement system
- 111: first contact surface
- 141: second contact surface
- 151: first annular sealing preform
- 152: second annular sealing preform
- 180: cavity
- 181: first sealing surface
- 182: second sealing surface
- 184: lower side of the holding member 18
- 185: upper side of the holding member 18
- 186: outer side of the holding member 18
- 187: inner side of the holding member 18
- 189: annular section of the holding member 18

## Claims

1. Measurement unit (1) for an ion-sensitive solid-state electrode (10), that serves to measure pH in a measurement solution (5),
with a layered structure (6) comprising
an ion-sensitive glass layer (11) having an upper side and a lower side, with a first ring-shaped contact surface (111) provided on the upper side, an electrically conducting layer (13) having an upper side and a lower side, and a substrate (14) having an upper side and a lower side, **characterised in**
**that** the electrically conducting layer (13) adheres with its lower side directly or via at least one intermediate layer (12) to the upper side of the ion-sensitive glass layer (11), and
**that** the electrically conducting layer (13) adheres with its upper side to the lower side of the substrate (14) that is provided on the upper side with a second ring-shaped contact surface (141); and
with a holding member (18) that is provided with a first ring-shaped sealing surface (181), a second ring-shaped sealing surface (182), and an annular section (189);
wherein the first ring-shaped sealing surface (181) is sealingly connected to the first ring-shaped contact surface (111),
wherein the second ring-shaped sealing surface (182) is connected to the second ring-shaped contact surface (141) of the substrate (14), and
wherein the first and second ring-shaped sealing surfaces (181, 182) of the holding member (18) are sealingly connected by the annular section (189) so that the ion-sensitive glass layer (11), the holding member 18 and the substrate (14) form a unity that is hermetically enclosing the electrically conductive layer (13) and, if present, the intermediate layer (12).

2. Measurement unit (1) according to claim 1, wherein
- the holding member (18) comprises ceramic or glass;
- the substrate (14) comprises at least one of the following materials: metal, steel, ceramic, glass, glass ceramic, polymer compound, fibre composite material;
- the electrically conducting layer (13) comprises a metal or metal alloy with a reduction potential of at least 1.0 V; and
- the ion-sensitive glass layer (11) comprises a glass, that preferably conducts ions of the electrically conducting layer (13).

3. Measurement unit (1) according to claim 1 or 2, wherein the intermediate layer (12) comprises a solid-state electrolyte.

4. Measurement unit (1) according to claim 3, wherein the solid-state electrolyte of the intermediate layer (12) conducts ions of the electrically conducting layer (13).

5. Measurement unit (1) according to claim 1 to 4, wherein the electrically conducting layer (13) comprises lithium or a lithium alloy as metal or metal alloy with a reduction potential of at least 1.0 V; and wherein the ions of the electrically conducting layer (13) are lithium ions.

6. Measurement unit (1) according to claim 1 to 5, wherein the first and second ring-shaped sealing surfaces (181, 182) and/or the first and second ring-shaped contact surfaces (111, 141) form circular closed loops that are arranged concentrically or offset from one another.

7. Measurement unit (1) according to claim 1 to 6, wherein the preferably disc shaped substrate (14) has an upper side facing a lower side of the holding member (18) and a lower side facing the upper side of the ion-sensitive glass layer (11), which faces with its lower side the measurement solution (5), and wherein the first ring-shaped contact surface (111) is located on the upper side of the ion-sensitive glass layer (11) and the second ring-shaped contact surface (141) is located on the upper side of the substrate (14).

8. Measurement unit (1) according to one of the claims 1 to 7, wherein the layered structure (6) has a first stepped profile with the ion-sensitive glass layer (11) having a diameter (d11) that is larger than the diameter (d14) of the substrate (14), which stepped profile of the layered structure (6) complements a second stepped profile provided at the lower side of the holding member (18).

9. Measurement unit (1) according to one of the claims 1 to 8, wherein the first ring-shaped sealing surface (181) of the holding member (18) is arranged in a first plane and the second ring-shaped sealing surface (182) of the holding member (18) is arranged in a second plane; and wherein the first and second planes are aligned in parallel to the substrate (14).

10. Measurement unit (1) according to one of the claims 1 to 9, wherein the first ring-shaped sealing surface (181) and the first ring-shaped contact surface (111), respectively the second ring-shaped sealing surface (182) and the second ring-shaped contact surface (141), are bonded with one another by either of the following materials:
a. diffused material of the adjoining ring-shaped sealing and contact surfaces (181, 111; 182, 141); or
b. a bonding material comprising glass or metal that has been arranged, melted and solidified between the adjoining ring-shaped sealing and contact surfaces (181, 111; 182, 141).

11. Measurement unit (1) according to claim 10, wherein
a. the bonding material on at least one of the adjoining ring-shaped sealing and contact surfaces (181, 111; 182, 141) is material deposited by a deposition process; or
b. the bonding material on at least one of the adjoining ring-shaped sealing and contact surfaces (181, 111; 182, 141) is a molten and solidified preform.

12. Measurement unit (1) according to claim 11, wherein the preforms comprise a first annular sealing preform (151) placed between the first ring-shaped sealing surface (181) and the first contact surface (111), as well as a second annular sealing preform (151) placed between the second ring-shaped sealing surface (182) and the second contact surface (141).

13. Measurement unit (1) according to one of the claims 1 to 12, wherein an electrical module (16), that is preferably connected to a thermal sensor, is placed on the upper side of the substrate (14).

14. Measurement unit (1) according to one of the claims 1 to 13, wherein the holding member (18) has a tubular or annular form with a cavity (180) that is filled and sealed with a moulding compound (17), such as an epoxy compound, which moulding compound (17) covers the upper side of the substrate (14) and preferably laterally adjoins the sealingly connected second ring-shaped sealing surface (182) and the second contact surface (141).

15. Measurement unit (1) according to one of the claims 1 to 14, wherein the ion-sensitive glass layer (11) is held by the holding member (18) and/or the substrate (12) under compressive stress preferably over the whole range of the specified operating temperature of the measurement unit (1).

16. Measurement unit (1) according to claim 15, wherein the thermal expansion coefficient (α₁₁) of the ion-sensitive glass layer (11) is lower than the thermal expansion coefficient (α₁₄) of the substrate (14); and wherein the ion-sensitive glass layer (11) is held under compressive stress by the substrate (14).

17. Measurement unit (1) according to claim 14 or 16, wherein the thermal expansion coefficient (α₁₁) of the ion-sensitive glass layer (11) is lower than the thermal expansion coefficient (α₁₈) of the holding member (18); and wherein the ion-sensitive glass layer (11) **is** held under compressive stress by the holding member (18).

18. Measurement unit (1) according to claim 15 or 17, wherein the thermal expansion coefficient (α₁₁) of the ion-sensitive glass layer (11) and the thermal expansion coefficient (α₁₄) of the substrate (14) and the thermal expansion coefficient (α₁₁) of the ion-sensitive glass layer (11) and the thermal expansion coefficient (α₁₈) of the holding member (18) differ by a value in the range from 1% -12.5%.

19. pH-sensitive solid-state electrode (10) comprising a measurement unit (1) according to one of the claims 1 - 18.
